# EUROPÄISCHE PATENTSCHRIFT

(11) **EP 0 781 702 B1**
(45) Veröffentlichungstag und Bekanntmachung des Hinweises auf die Patenterteilung: **07.11.2001**
(21) Anmeldenummer: 96120235.5
(22) Anmeldetag: 17.12.1996
(51) Int. Cl.: B62J 6/00

(54) **Fahrtrichtungsanzeigegerät für Fahrräder und Mofas**
Direction indicator apparatus for bicycle and mopeds
Appareil indicateur de direction pour bicyclette et vélomoteurs

(30) Priorität: 28.12.1995 DE 19548964
(43) Veröffentlichungstag der Anmeldung: 02.07.1997
(73) Patentinhaber: Grotz, Wilhelm, 87647 Oberthingau (DE)
(72) Erfinder: Grotz, Wilhelm, 87647 Oberthingau (DE)
(74) Vertreter: Hübner, Hans-Joachim, Dipl.-Ing.

(56) Entgegenhaltungen:
- CH-A- 167 352
- CH-A- 176 510
- CH-A- 179 305
- CH-A- 196 116
- FR-A- 1 149 287

## Beschreibung

Die Erfindung betrifft Fahrtrichtungsanzeigegerät für Fahrräder und Mofas, mit einer am Lenker oder dem Fahrradrahmen zu befestigenden horizontalen Querstange, die von der Rahmenebene mittig durchsetzt wird und nahe deren Enden je ein als Winker wirkender Schwenkarm um eine horizontale Längsachse schwenkbar gelagert ist, die Schwenkarme in ihren Ruhestellungen im wesentlichen parallel zur Querstange liegen und jeder Schwenkarm eine zum Schwenklager koaxiale Antriebsscheibe aufweist, die mit einer Schubstange in Antriebseingriff steht, die etwa parallel zur Querstange verschiebbar geführt ist, und mit einem Bowdenzug, der zu einer am Lenker befestigbaren Handbetätigungsvorrichtung führt, bei deren Betätigung der Schwenkhebel aus einer Ruhestellung um einen Winkel von mindestens 180° in eine Funktionsstellung schwenkbar ist, in welcher das freie, eine Signalgeberausbildung aufweisende Ende über den Lenker seitlich vorsteht oder allenfalls in dessen Bereich endet, wobei an den Enden der Querstange je ein Lagergehäuse befestigt ist.
Ein derartiges Fahrtrichtungsanzeigegerät ist aus der CH-196 116 A bekannt. Die Querstange ist mittig mittels einer Lasche durch die, die Vorderradgabel mit dem Lenker verklemmenden Kopfschraube am Lenker befestigt. Die Querstange kann daher nur in einer ganz bestimmten Position vor dem Lenker angebracht werden, was nachteilig ist, weil am Lenker heutiger Fahrräder zusätzliche Ausrüstungsgegenstände wie Fahrradcomputer, Tachometer und ähnliches angebracht sind, die die Montage des bekannten Fahrtrichtungsanzeigegerätes behindern oder sogar ausschließen. Weiterhin ist das bekannte Gerät nicht universell für alle infrage kommenden Lenker geeignet, da die Schwenkarme um feste Schwenkachsen an den Enden der Querstange schwenkbar sind. Für Kinderräder würde die Querstange über die Lenkerenden seitlich hinausstehen und somit beim Umfallen eines Fahrrades beschädigt werden. Ein weiterer Nachteil ist bei dem bekannten Fahrtrichtungsanzeigegerät darin zu sehen, daß die Winker-Schwenkarme von der Handbetätigungsvorrichtung nicht kontrolliert, also in der seitlich ausgeklappten Stellung nicht auf- und ab bewegt werden können, beim Betätigen der Handbetätigungsvorrichtung vielmehr nur ein Schwungmoment erhalten, aufgrund dessen die Schwenkhebel bis über die obere Totpunktlage hinaus geschwenkt werden und dann unkontrolliert durch Schwerkraft in die seitlich ausladende Anzeigestellung gelangen.

Aus der CH-179 305 A ist ein andersartiges Fahrtrichtungsanzeigegerät bekannt, bei dem ein Schwenkarm in der Rahmenmittelebene angeordnet ist und um eine lotrechte Achse nach beiden Seiten teilweise ausschwenkbar ist. Wegen der geringen seitlichen Ausladung ist der Signaleffekt gering und wird von den übrigen Verkehrsteilnehmern leicht übersehen. Auch eignet sich das Fahrtrichtungsanzeigegerät nicht für alle Fahrradtypen, da mindestens für das vordere Anzeigegerät eine obere horizontale Rahmenstange erforderlich ist. Kinderräder haben solche Rahmenstangen - wie sie bei Herrenrädem üblich sind - häufig nicht. Die Betätigung des vorderen und des hinteren Schwenkarmes erfolgt hier über einen Zahnstangen-Zahnritzeltrieb, wobei die Zahnstange mittels eines Bowdenzuges mit einem Schwenkhebel im Bereich eines der beiden Lenkergriffe verbunden ist.

Aufgabe der Erfindung ist es, ein Fahrtrichtungsanzeigegerät der eingangs genannten Art dahingehend weiter auszubilden, daß es an die Lenkerbreite angepasst werden kann und daß die Betätigung der Winker-Schwenkarme möglich ist, ohne daß der Radfahrer die Lenkergriffe vorübergehend loslassen muß.

Diese Aufgabe wird bei einem Fahrtrichtungsanzeigegerät der eingangs genannten Art dadurch gelöst, daß an den Enden der Querstange die beiden Lagergehäuse auf der Querstange verschiebbar angeordnet und festklemmbar sind, daß die Querstange mittels zweier Befestigungsstreben gelenkig befestigt ist, deren Enden je um parallele Querachsen verschwenkbare und feststellbare Klemmanschlüsse aufweisen, daß die Antriebsscheibe als Antriebsritzel und die Schubstange als Zahnstange ausgebildet ist, daß beide Schubstangen je über einen Bowdenzug mit je einer Handbetätigungsvorrichtung in Verbindung stehen, die einen dem jeweiligen Lenkerende benachbarten Drehgriff oder einen Drehring mit schwenkbarem Betätigungsarm aufweist und daß an den Drehring bzw. dem Drehgriff die Seele des Bowdenzuges befestigt ist, während dessen Mantel an einem lenkerfesten Arm festgehalten wird. Durch Betätigung der Handbetätigungsvorrichtung ist der Schwenkarm aus einer Ruhestellung um einen Winkel im Bereich von 150° bis 220° in eine Funktionsstellung schwenkbar, in welcher das freie, eine Signalgeberausgebung aufweisende Ende über den Lenker seitlich vorsteht und von vorn und hinten sichtbar ist.

Dank der auf der Querstange verschiebbaren Lagergehäuse können vergleichsweise kurze Querstangen verwendet werden, die nicht über die Lenkerbreite hinausreichen. Besonders vorteilhaft ist die Getriebeverbindung jedes Lenker-Schwenkarmes mit einem eigenen Handbetätigungsorgan, so daß eine kontrollierte Bewegung des jeweiligen Winkerhebels z.B. mit dem Daumen der jeweiligen Hand möglich ist, ohne den Lenkergriff loslassen zu müssen. Diese kontrollierte Winkerbewegung umfaßt auch das periodische Aufwärts- und Abwärtsschwenken des Winkerhebels, um die Signalwirkung zu vergrößern.

Um den Winker-Schwenkarm lediglich mit dem Daumen der Hand kontrolliert bewegen zu können, ist gemäß einer Ausgestaltung der Erfindung vorgesehen, daß jeder Schwenkarm mittels einer, in dem Lagergehäuse eingebauten Feder in seine durch einen Anschlag definierte Ruhestellung vorgespannt ist, so daß der Schwenkarm bei Freigabe der Handbetätigungsvorrichtung allein durch Federkraft aus der Funktionsstellung in die Ruhestellung zurückgelangt.

Mit dem erfindungsgemäßen Antriebsmechanismus unter Verwendung des Zahnritzels am Schwenkarm ist eine Übersetzung ins Schnelle möglich, so daß eine Schwenkbewegung des Betätigungsorgans der Handbetätigung von etwa 60° ausreicht, um den Schwenkarm um mindestens 180° nach außen zu verschwenken.

Durch die erfindungsgemäße Maßnahme, daß die Lagergehäuse querverschiebbar und feststellbar befestigt sind, kann die Ausladung der Schwenkarme in den Funktionsstellungen verändert und an die Lenkerbreite angepaßt werden. Bei schmalen Lenkern, insbesondere bei Kinderfahrrädern ist es möglich, die beiden Schwenkarme in ihren Ruhestellungen einander im mittleren Bereich des Fahrrades überlappen zu lassen, da gemäß einem weiteren Erfindungsmerkmal die Schwenkarme in dichtbenachbarten parallelen Querebenen verschwenkbar sind.

Vorteilhafte Ausgestaltungen der Erfindung bilden die Gegenstände der übrigen Unteransprüche.

Anhand der Zeichnung, die ein Ausführungsbeispiel darstellt, wird die Erfindung näher beschrieben.

Es zeigt:
- FIG.1: eine Vorderansicht eines Fahrrades mit dem erfindungsgemäßen Fahrtrichtungsanzeigegerät,
- FIG.2: eine Draufsicht auf das Anzeigegerät,
- FIG.3: eine Seitenansicht des am Lenker befestigten Anzeigegerätes,
- FIG.4: eine Draufsicht einer Befestigungsstrebe, von der ein Paar verwendet wird, um das Anzeigegerät am Lenker befestigen zu können,
- FIG.5: eine Seitenansicht der Befestigungsstrebe,
- FIG.6: einen Vertikalschnitt durch ein Lagergehäuse zur Lagerung und zum Antrieb eines Schwenkarms des Anzeigegerätes,
- FIG.7: eine Querschnittansicht durch das Lagergehäuse mit Antriebseinrichtung für den Schwenkarm des Anzeigegerätes,

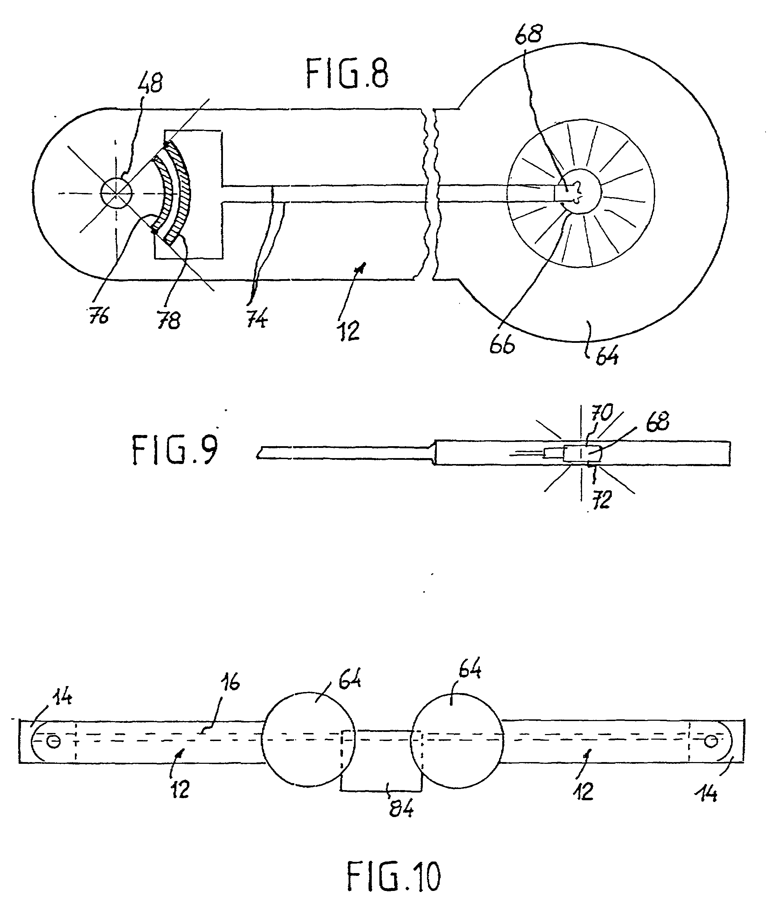

- FIG.8: eine Ansicht des als Winker betriebenen Schwenkarms,
- FIG.9: eine Draufsicht auf einen Teil des Schwenkarms im Bereich einer Signalscheibe mit eingebauter Signalleuchte,
- FIG.10: eine schematische Vorderansicht des Anzeigegerätes mit zentraler Stromversorgung und Blinkerelektronik,
- FIG.11: eine Ansicht der Schwenkarme in ihren verschiedenen Stellungen,
- FIG.12: eine rückseitige Ansicht des Lagergehäuses für die Schwenkarme und
- FIG.13: ein elektrisches Schaltbild der Blinkerelektronik.

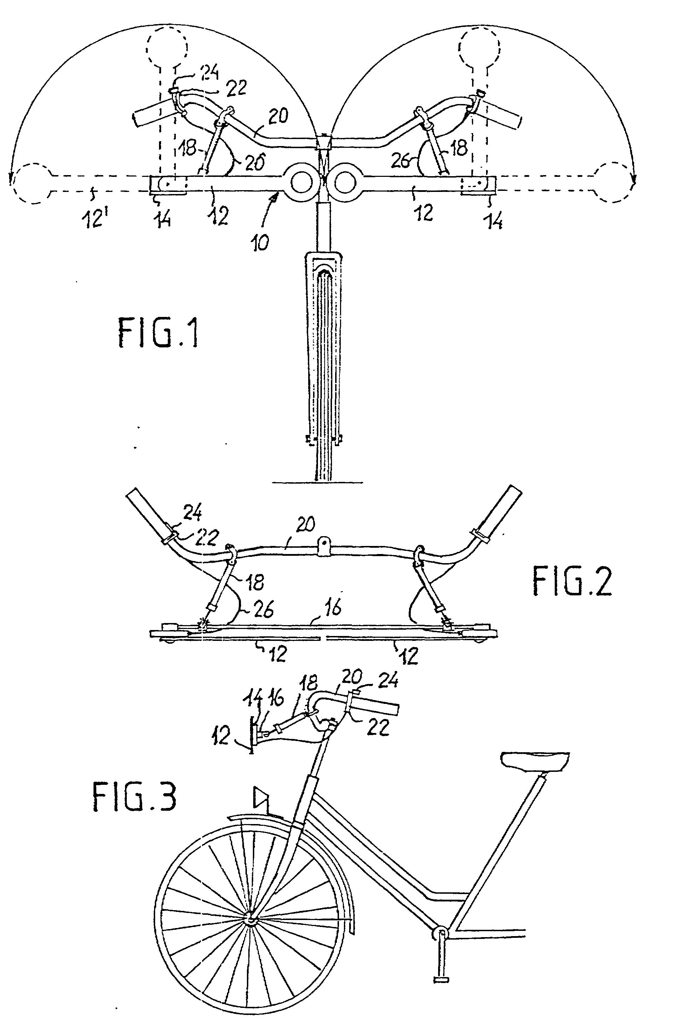

Ein allgemein mit 10 bezeichnetes Fahrrichtungsanzeigegerät weist zwei Schwenkarme 12 auf, die in Lagergehäusen 14 schwenkbar gelagert sind, welche ihrerseits an einer Querstange 16 querverschiebbar und in den gewünschten Querpositionen festklemmbar sind. Die Querstange 16 ist über Befestigungsstreben 18 am Lenker 20 festgeklemmt. Nahe jedes Handgriffes des Lenkers 20 ist auf dem Lenker ein Drehring 22 drehbar gelagert, der eine Betätigungstaste 24 aufweist, die mit dem Daumen des Fahrers um etwa 60 ° verschwenkt werden kann. Diese Schwenkbewegung wird über einen Bowdenzug 26 in das Lagergehäuse 14 eingeleitet, um den jeweiligen Schwenkarm 12 aus der in FIG.1 mit ausgezogenen Linien dargestellten Ruhestellung über die gestrichelt dargestellte 90 °- Stellung hinaus nach außen bis in eine mittlere Funktionsstellung 12' zu verschwenken. Der Mindestschwenkwinkel des Schwenkarmes 12 beträgt also 180°. Vorzugsweise wird ein maximaler Schwenkwinkel von 220 ° vorgesehen, so daß der Schwenkarm um die Horizontalstellung 12' jeweils noch auf- und abwärts schwenken zu können.

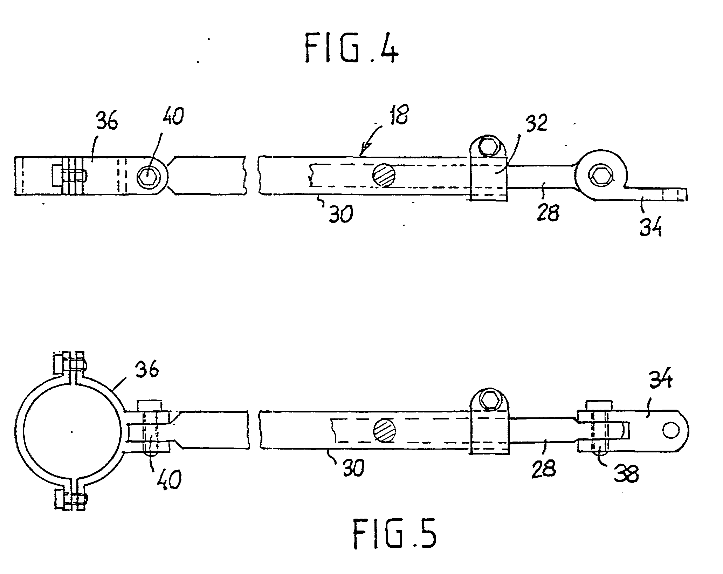

Die Figuren 4 und 5 zeigen eine der beiden Befestigungsstreben 18 im Detail, wobei zu sehen ist, daß sie aus einem Innenrohr 28 und aus einem Außenrohr 30 bestehen, wobei beide Rohre 28, 30 relativ zueinander ausziehbar und mittels einer Klemmlasche 32 feststellbar sind. Die beiden Enden des Teleskoprohres 28, 30 weisen Anschlußteile 34, 36 auf, die mit dem Teleskoprohr 28, 30 jeweils um parallele Schwenkachsen 38, 40 schwenkbar verbunden sind. Das Anschlußteil 34 dient zur Befestigung an der Querstange 16 während das Anschlußteil 36 als Klemmschelle ausgebildet ist und zur Befestigung am Lenker 20 dient. Das Anzeigefgerät 10 kann damit in seiner Höhenlage am Fahrrad im weiten Bereich verändert werden, wie es auch möglich ist, durch Ausziehen der Teleskoprohre 28, 30 den Abstand des Anzeigegerätes 10 vom Lenker 20 passend einzustellen.

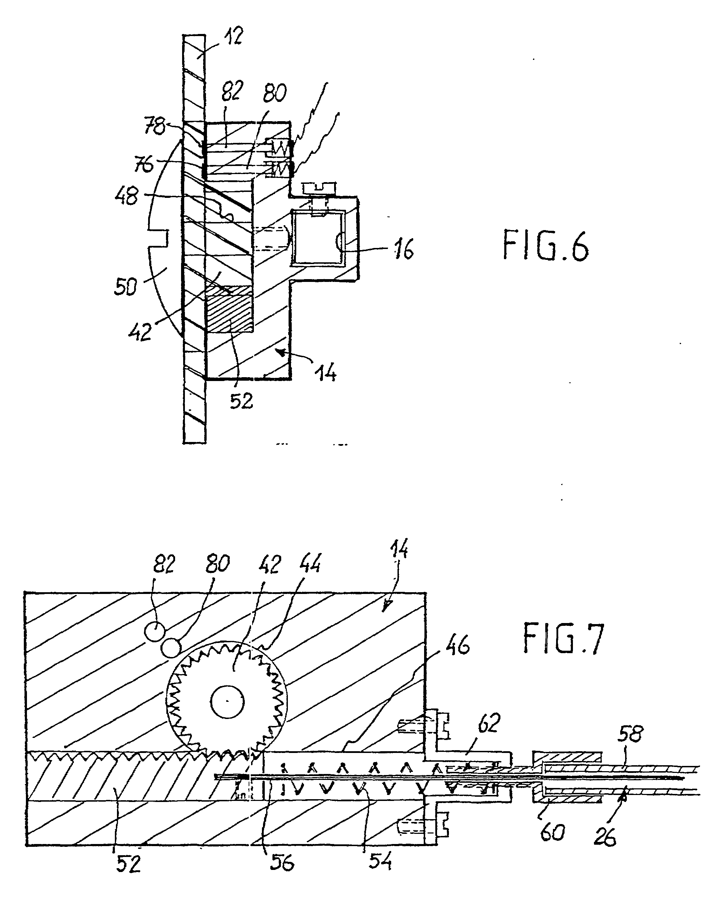

Die Figuren 6 und 7 veranschaulichen den Mechanismus, mit dem die Bowdenzüge die Schwenkarme betätigen. Die Schwenkarme 12 sind plattenförmig ausgebildet und einseitig mit einem Zahnritzel 42 versehen, das vorzugsweise mit dem Schwenkarm 12 ein einstückiges Spritzgußteil aus Kunststoff bildet. Das Lagergehäuse 14 weist eine kreiszylindrische Vertiefung 44 auf, die in einem, das ganze Lagergehäuse 14 durchsetzenden Querkanal 46 mit einem gewissen Umfangswinkel eintaucht. Eine Bohrung 48 des Schwenkarms 12 und des Ansatzritzels 42 wird von einer Lagerschraube 50 durchsetzt, die in das Lagergehäuse 14 eingeschraubt ist und aufgrund eines abgesetzten Lagerabschnittes mit etwas größerer Länge als die Außenbreite des Schwenkarms 12 einschließlich ihres Zahnritzels 42 ein leichtgängiges Bewegungsspiel sicherstellt. In dem Querkanal 46 ist eine Zahnstange 52 verschiebbar geführt, die mit dem Zahnritzel 42 kämmt.

Die Zahnstange 52 hat eine mittlere Längsbohrung, in welche die Seele 56 eines Bowdenzuges 26 eingreift und mittels einer Klemmschraube gesichert ist. Der Mantel 58 des Bowdenzuges 26 ist in einem lösbaren Bauteil 60 abgestützt, welches in einem Anbauteil 62 des Lagergehäuses 14 verschraubbar gelagert ist , wodurch eine Feinjustierung gegeben ist.

Im Führungskanal 46 für die Zahnstange 52 ist eine Schraubendruckfeder 54 angeordnet, durch die sich die Seele 56 des Bowdenzuges 26 hindurch erstreckt. Die Feder 54 drückt die Zahnstange 52 bis an das linke Ende (FIG.7) des Lagergehäuses 14, wo der Kanal 46 durch eine nicht dargestellte Abschlußplatte geschlossen ist, die als Anschlag für die Zahnstange 52 dient. In dieser Stellung der Zahnstange 52 und des Ritzels 42 nimmt der Schwenkarm 12 die in FIG.1 mit ausgezogene Linien dargestellte horizontale, zur Fahrradmitte hin weisende Ruhestellung ein. Wird nun die Betätigungstaste 24 um etwa 60 ° mit dem Daumen verschwenkt, so zieht der Bowdenzug 26 die Zahnstange 52 gegen die Wirkung der Feder 54 nach rechts. Dadurch gelangt der Schwenkarm 12 in seinen Funktionsbereich beidseitig der mittleren Funktionstellung 12' (FIG.1). Durch diese Mechanik findet also eine Kraftübertragung von mindestens 3:1, vorzugsweise aber 4:1 statt. Gibt man die Schwenktaste 24 frei, schiebt die Feder 54 die Zahnstange 52 wieder in ihre Ausgangsstellung nach links (FIG.7) bis zum Gehäuseanschlag. Dadurch schwenkt der Schwenkarm 12 in seine Ruhestellung.

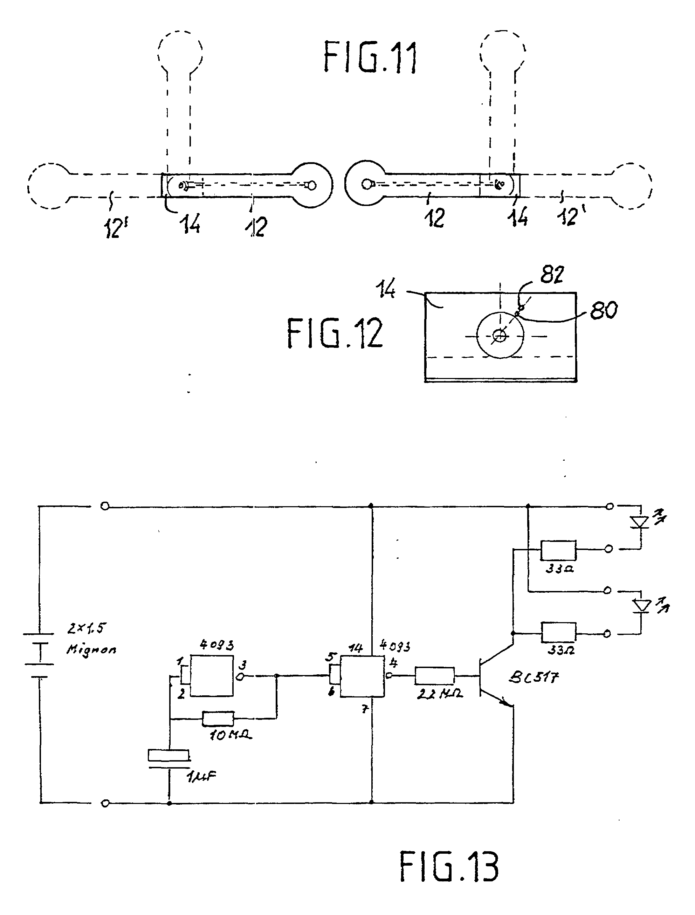

Der Schwenkarm 12 hat an seinem, dem Schwenklager 48 gegenüberliegenden freien Ende eine einstückig angeformte Signalscheibe 64 mit einem zentralen Loch 66, in dem eine Leuchtdiode 68 hineinragt, deren Glasampulle an gegenüberliegenden Flächen mit Vergrößerungsprismen 70, 72 ausgebildet ist. Die Kontakte der LED 68 sind über Anschlußdrähte 74 je mit einem Schleifringsegment 76, 78 auf der, dem Lagergehäuse 14 benachbarten Seitenfläche verbunden. Die beiden Schleifringsegmente 76, 78 liegen koaxial zur Lagerbohrung 48. Die beiden Schleifringsegmente 76, 78 stehen mit Kontaktbolzen 80, 82 in leitender Verbindung, die im Lagergehäuse 14 verschiebbar geführt und mittels Federn in Anlage an den Schleifringsegmenten 76, 78 gehalten werden. Jeder dieser Kontaktstifte 82 ist über ein Kabel an einen elektronischen Schaltkreis angeschlossen, dessen Schaltbild in FIG.13 gezeigt ist. Dieser Schaltkreis stellt einen freischwingenden Multivibrator dar, der als Blinksignalgeber dient. Der Schaltkreis gemäß FIG.13 sitzt zusammen mit einem wiederaufladbaren Akku oder zwei einfachen 1,5 V-Batterien in einem Versorgungsgehäuse 84, das im mittleren Bereich an der Querstange 16 befestigt ist. Die beiden Schleifringsegmente 76, 78 liegen in einem Winkelbereich von 90 ° beidseitig der Längsmittellinie des Schwenkarms 12 und zwar der Signalscheibe 64 zugewandt. Die beiden Kontaktstifte 82, 80 liegen in radialer Ausrichtung zur Lagerbohrung 48 in einem Winkelabstand von etwa 135 °, wie sich aus den Figuren 7 und 12 ergibt und zwar bezogen auf diese Längsrichtung, so daß die Schleifringsegmente 76, 78 etwa nach einer 90 °-Schwenkung des Schwenkarms 12 mit dem Kontaktstiften 80, 82 in Berührung treten. Es verbleibt dann ein weiterer Schwenkwinkel von 90 ° innerhalb deren die Blinkleuchten 68 aktiviert sind. Selbstverständlich lassen sich die beiden Kontaktstifte 80, 82 in einer anderen Radialebene anordnen, beispielsweise in der den Schwenkarm 12 in dessen Ruhestellung mittig durchsetzenden Längsebene und zwar von der Signalscheibe 64 abgewandt. Der Blinkbereich der Blinkleuchten 68 wäre dann beidseitig 45 ° von der mittleren Funktionsstellung 12' (FIG.1).

## Patentansprüche

1. Fahrtrichtungsanzeigegerät für Fahrräder und Mofas, mit einer am Lenker (20) oder dem Fahrradrahmen zu befestigenden horizontalen Querstange (16), die von der Rahmenebene mittig durchsetzt wird und nahe deren Enden je ein als Winker wirkender Schwenkarm (12) um eine horizontale Längsachse schwenkbar gelagert ist, die Schwenkarme (12) in ihren Ruhestellungen im Wesentliehen parallel zur Querstange (16) liegen und jeder Schwenkarm (12) eine zum Schwenklager (48) koaxiale Antriebsscheibe (42) aufweist, die mit einer Schubstange (52) in Antriebseingriff steht, die parallel zur Querstange (16) verschiebbar geführt ist, und mit einem Bowdenzug (26), der zu einer am Lenker (20) befestigbaren Handbetätigungsvorrichtung (22, 24) führt, bei deren Betätigung der Schwenkhebel (12) aus einer Ruhestellung um einen V/inkel von mindestens 180° in eine Funktionsstellung (12') schwenkbar ist, in welcher das freie, eine Signalgeberausbildung (64, 68) aufweisende Ende über den Lenker (20) seitlich vorsteht oder allenfalls in dessen Bereich endet, wobei an den Enden der Querstange (16) je ein Lagergehäuse (14) befestigt ist, **dadurch gekennzeichnet, daß** die beiden Lagergehäuse (14) auf der Querstange (16) verschiebbar angeordnet und festklemmbar sind, daß die Querstange (16) mittels zweier Befestigungsstreben (18) gelenkig befestigt ist, deren Enden je um parallele Querachsen (38, 40) verschwenkbare und feststellbare Klemmanschlüsse (34, 36) aufweisen, daß die Antriebsscheibe (42) als Antriebsritzel und die Schubstange (52) als Zahnstange ausgebildet ist, daß beide Schubstangen (52) je über einen Bowdenzug mit je einer Flandbetätigungsvorrichtung (22, 24) in Verbindung stehen, die einen dem jeweiligen Lenkerende benachbarten Drehgriff oder einen Drehring (22) mit schwenkbarem Betätigungsarm (24) aufweist und daß an den Drehring (22) bzw. dem Drehgriff die Seele (56) des Bowdenzuges (26) befestigt ist, während dessen Mantel (58) an einem lenkerfesten Arm festgehalten wird.

2. Anzeigegerät nach Anspruch 1 **dadurch gekennzeichnet, daß** jeder Schwenkarm (12) mittels einer, in dem Lagergehäuse (14) eingebauten Feder (54) in seine, durch einen Anschlag definierte Ruhestellung vorgespannt ist, so daß der Schwenkarm (12) bei Freigabe der Handbetätigungsvorrichtung (22, 24) allein durch Federkraft aus der Funktionsstellung in die Ruhestellung zurückgelangt.

3. Anzeigegerät nach Anspruch 2, **dadurch gekennzeichnet, daß** die Feder (54) als zylindrische Schraubendruckfeder ausgebildet ist, die im Führungskanal (46) der Zahnstange (52) angeordnet ist und sich an dieser und einem lösbaren Anbauteil (62) des Lagergehäuses (14) abstützt und von der Seele (56) des Bowdenzuges (26) durchsetzt wird.

4. Anzeigegerät nach einem der Ansprüche 1 bis 3, **dadurch gekennzeichnet, daß** die Zahnstange (52) an einem Anschlag des Lagergehäuses (14) anstößt, wenn sich der Schwenkarm (12) in seiner Ruhestellung befindet.

5. Anzeigegerät nach einem der Ansprüche 1 bis 4, **dadurch gekennzeichnet, daß** die beiden Schwenkarme (12) in parallelen Querebenen verschwenken und einander in ihren Ruhestellungen in Querrichtung überlappen.

6. Anzeigegerät nach einem der Ansprüche 1 bis 5, **dadurch gekennzeichnet, daß** das freie Ende jedes Schwenkarms (12) flächenmäßig zu einer kreisförmigen Scheibe (64) vergrößert ist, in deren Mitte sich ein Loch (66) befindet, in welchem eine nach vom und hinten strahlende Signalleuchte (68) angeordnet ist, deren Kontakte je mit koaxial zur Schwenkachse (48) auf dem Schwenkarm (12) angeordneten Schleifringsegmenten (76, 78) verkabelt sind, die außerhalb der Ruhestellung des Schwenkarmes (12) je mit einem gefederten Kontaktstift (80, 82) im Lagergehäuse (14) in Kontakt stehen, wobei die Kontaktstifte (80, 82) ständig oder über einen Schalter an eine Stromversorgungsquelle angeschlossen sind.

7. Anzeigegerät nach einem der Ansprüche 1 bis 6, **dadurch gekennzeichnet, daß** die Befestigungsstreben (18) teleskopierbar ausgebildet sind.

## Claims

1. A direction indicator system for bicycles and mopeds, comprising a horizontal transverse bar (16) to be fixed to the handlebars (20) or the bicycle frame, the plane of the frame extending centrally through the transverse bar (16), close to each end of which a swivel arm (12), acting as a direction indicator, is mounted so as to be pivotable about a horizontal longitudinal axis, the swivel arms (12) lying substantially parallel to the transverse bar (16) in their rest positions and each swivel arm (12) having a driving disc (42) co-axial with the swivel bearing (48) and in driving engagement with a push rod (52) displaceable parallel to the transverse bar (16), and comprising a Bowden cable (26) leading to a hand-operated device (22, 24) fixable to the handlebars (20) and during the operation of which the pivoted lever (12) is pivotable from a rest position about an angle of at least 180° into an operating position (12') in which the free end, formed as a signalling device (64, 68), projects laterally beyond the handlebars (20) or, if necessary, ends in the region thereof, a bearing housing (14) being fixed to each end of the transverse bar (16), **characterised in that** the two bearing housings (14) are displaceably arranged on the transverse bar (16) and are clampable thereon, **in that** the transverse bar (16) is articulated by means of two fixing struts (18), the ends of which have securable clamped connections (34, 36) pivotable about parallel transverse axes (38, 40), **in that** the driving disc (42) is formed as a drive pinion and the push rod (52) is formed as a rack, **in that** the two push rods (52) are each connected by a Bowden cable to a hand-operated device (22, 24) having a twist grip, adjacent to the respective end of the handlebars, or a rotary ring (22) with a pivotable operating arm (24), and **in that** the core (56) of the Bowden cable (26) is fastened to the rotary ring (22) or the twist grip, whereas its sheathing (58) is secured to an arm fixed to the handlebars.

2. An indicator system according to claim 1, **characterised in that** each swivel arm (12) is biased towards its rest position, defined by a stop, by means of a spring (54) incorporated into the bearing housing (14) so that, on release of the hand-operated device (22, 24), the swivel arm (12) moves back into the rest position from the operating position solely by spring force.

3. An indicator system according to claim 2, **characterised in that** the spring (54) is formed as a cylindrical helical compression spring which is arranged in the guide channel (46) of the rack (52) and is supported against the latter and against a detachable add-on part (62) of the bearing housing (14) and through which the core (56) of the Bowden cable (26) extends.

4. An indicator system according to any one of claims 1 to 3, **characterised in that** the rack (52) strikes a stop of the bearing housing (14) when the swivel arm (12) is in its rest position.

5. An indicator system according to any one of claims 1 to 4, **characterised in that** the two swivel arms (12) pivot in parallel transverse planes and overlap one another in the transverse direction in their rest positions.

6. An indicator system according to any one of claims 1 to 5, **characterised in that** the free end of each swivel arm (12) is enlarged two-dimensionally to form a circular disc (64), in the centre of which is a hole (66) in which is arranged a signal lamp (68) shining towards the front and the rear, the contacts of which are each wired to slip-ring segments (76, 78) arranged on the swivel arm (12) so as to be co-axial with the pivoting axis (48), the segments (76, 78), outside of the rest position of the swivel arm (12), each being in contact with a spring-loaded contact pin (80, 82) in the bearing housing (14), the contact pins (80, 82) being connected to a power supply source permanently or via a switch.

7. An indicator system according to any one of claims 1 to 6, **characterised in that** the fixing struts (18) are telescopically formed.

## Revendications

1. Indicateur de direction de circulation pour bicyclettes et cyclomoteurs, avec une barre transversale horizontale (16), à fixer sur le guidon (20) ou le châssis de la bicyclette, traversée en son centre par le plan du châssis et près de chacune des extrémités de laquelle est monté, de manière pivotable autour d'un axe longitudinal horizontal, un bras pivotant (12) servant de clignoteur, les bras pivotants (12) étant, en position de repos, sensiblement parallèles à la barre transversale (16) et chaque bras pivotant (12) présentant un disque d'entraînement (42) coaxial au palier de pivotement (48) et venant en prise d'entraînement avec une bielle (52) guidée de manière déplaçable parallèlement à la barre transversale (16), et avec une transmission Bowden (26) menant à un dispositif d'actionnement manuel (22, 24) pouvant être fixé au guidon (20), à l'actionnement duquel le levier pivotant (12) peut pivoter d'une position de repos, suivant un angle d'au moins 180°, en une position de fonctionnement (12') dans laquelle l'extrémité libre présentant un aménagement de signalisation (64, 68) fait saillie latéralement par rapport au guidon (20) ou en tout cas se termine à l'endroit de ce dernier, à chacune des extrémités de la barre transversale (16) étant fixé un boîtier de coussinet (14), **caractérisé par le fait que** les deux boîtiers de coussinet (14) sont disposés de manière déplaçable et peuvent être serrés sur la barre transversale (16), que la barre transversale (16) est fixée de manière articulée à l'aide de deux tirants de fixation (18) dont les extrémités présentent, chacune, des connexions de serrage (34, 36) pivotables et pouvant être fixées autour d'axes transversaux (38, 40) parallèles, que le disque d'entraînement (42) se présente sous forme de pignon d'entraînement et la bielle (52) sous forme de tige dentée, que chacune des deux bielles (52) communique, par l'intermédiaire d'une transmission Bowden, avec un dispositif d'actionnement manuel (22, 24) présentant une poignée rotative ou une bague rotative (22) à bras d'actionnement pivotable (24) adjacente à l'extrémité de guidon respective et qu'à la bague rotative (22) ou à la poignée rotative est fixée l'âme (56) de la transmission Bowden (26), tandis que son enveloppe (58) est maintenue fixée à un bras fixé au guidon.

2. Indicateur suivant la revendication 1, **caractérisé par le fait que** chaque bras pivotant (12) est prétendu, à l'aide d'un ressort (54) incorporé dans le boîtier de coussinet (14), dans sa position de repos définie par une butée, de sorte que le bras pivotant (12), lorsque le dispositif d'actionnement manuel (22, 24) est relâché, retourne de la position de la fonctionnement à la position de repos uniquement sous la force de ressort.

3. Indicateur suivant la revendication 2, **caractérisé par le fait que** le ressort (54) se présente sous forme de ressort de pression hélicoïdal disposé dans le canal de guidage (46) de la tige dentée (52) et s'appuyant sur cette dernière et sur une pièce rapportée (62) amovible du boîtier de coussinet (14) et traversé par l'âme (56) de la transmission Bowden (26).

4. Indicateur suivant l'une des revendications 1 à 3, **caractérisé par** le fait la tige dentée (52) vient heurter contre une butée du boîtier de coussinet (14) lorsque le bras pivotant (12) se trouve dans sa position de repos.

5. Indicateur suivant l'une des revendications 1 à 4, **caractérisé par le fait que** les deux bras pivotants (12) pivotent dans des plans transversaux parallèles et se recouvrent dans le sens transversal dans leurs positions de repos.

6. Indicateur suivant l'une des revendications 1 à 5, **caractérisé par le fait que** l'extrémité libre de chaque bras pivotant (12) est, en surface, agrandi pour former un disque circulaire (64) au centre duquel se situe un trou (66) dans lequel est disposé un voyant lumineux (68) rayonnant vers l'avant et vers l'arrière dont les contacts sont raccordés, chacun, à des segments de bague collectrice (76, 78), disposés sur le bras pivotant (12), coaxialement à l'axe de pivotement (48), qui, en dehors de la position de repos du bras de pivotement (12), sont, chacun, en contact avec une goupille de contact à ressort (80, 82) dans le boîtier de coussinet (14), les goupilles de contact (80, 82) étant raccordées en permanence, ou par l'intermédiaire d'un interrupteur, à une source d'alimentation de courant.

7. Indicateur suivant l'une des revendications 1 à 6, **caractérisé par le fait que** les tirants de fixation (18) se présentent de forme extensible téléscopiquement.
